(19) Europäisches Patentamt
European Patent Office
Office européen des brevets

(11) EP 2 449 720 B1

(12) EUROPEAN PATENT SPECIFICATION

(45) Date of publication and mention of the grant of the patent:
**01.05.2013 Bulletin 2013/18**

(21) Application number: **10768267.6**

(22) Date of filing: **29.06.2010**

(51) Int Cl.:
***H04L 9/18*** (2006.01) ***H04L 9/06*** (2006.01)

(86) International application number:
**PCT/FI2010/050560**

(87) International publication number:
**WO 2011/001030 (06.01.2011 Gazette 2011/01)**

# (54) METHOD AND ARRANGEMENT FOR PROTECTING FILE-BASED INFORMATION

VERFAHREN UND ANORDNUNG ZUM SCHÜTZEN VON DATEIBASIERTER INFORMATION

PROCÉDÉ ET AGENCEMENT POUR PROTÉGER DES INFORMATIONS DE FICHIER

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **29.06.2009 FI 20090254**

(43) Date of publication of application:
**09.05.2012 Bulletin 2012/19**

(73) Proprietor: **Envault Corporation Oy**
**01530 Vantaa (FI)**

(72) Inventors:
- **OLLIKAINEN, Ville**
  **FI-03400 Vihti (FI)**
- **PESOLA, Juuso**
  **FI-00990 Helsinki (FI)**

(74) Representative: **Savela, Antti-Jussi Tapani**
**Patent Agency Compatent Ltd.**
**Hitsaajankatu 6**
**00810 Helsinki (FI)**

(56) References cited:
**EP-A1- 1 995 710**
**US-A- 4 815 130**
**US-A1- 2003 108 196**
**US-A1- 2009 034 715**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Field of the Invention

The invention is related data encryption and cryptography. More specifically, the invention relates to encrypting of a file-based data volume, partitioning data into two sections of different sizes so the smaller section is required to be able to utilize the larger one, to confirm the data integrity, and to recognize whether the data is encrypted or unencrypted.

### Background of the Invention

**Firstly, processing of block mode data is discussed below.**

One of the handbooks of the art is the Handbook of Applied Cryptography (Discrete Mathematics and Its Applications), Alfred Menezes, Paul van Oorschot, and Scott Vanstone (CRC-Press, 1996, ISBN 978-0849385230).

In WO 03/088052, Andrew Tune teaches a way to partition data, such as credit card data, into two sections kept separately, locally, and on a server. Tune adds an tagto a local section based on which a section on a server can be retrieved and the sections combined with each other. The method taught by Tune does not, however, check the integrity of the restored data; neither does Tune cater for the processing of unencrypted data amongst encrypted data. In addition, Tune does not cover situations where one of the sections is modified afterwards, for example, by truncating it. Tune does not either teach how to minimize the size of the other data section.

A block mode data volume consists of several blocks of the same size into which data is saved. Each block has its own tag, usually a sequence number. This tag is generally called a block number.

Typical examples of block mode data volumes include computer mass storages, for example hard drives (HDD = Hard Disk Drive), or semiconductor-based non-volatile memories (SSD = Solid State Disk). Often, a file system using which data can be saved as files is created on a block mode data volume. When data is written in a mass storage or read from it, the writing or reading point is determined based on a logical block number (LBA). A file system attends, among others, to which position indicated by LBA data is written on each occasion and from where it is read. The writing itself is usually performed in full blocks, a typical block size being any power of two, most often at least 512 bytes.

Secondly, encryption of block mode is discussed below.

For encrypting block mode data it is typically used a block cipher algorithm, such as AES-256 (FIPS 197, Advanced Encryption Standard (AES), 2001, National Institute of Standards and Technology, USA), using which a plaintext of certain length is modified into ciphertext using an encryption key. In many encryption algorithms, the size of a cipher block is, however, smaller than the block size of the data volume, for example, in said AES-256 it is 16 bytes. For this reason, to be able to encrypt a single data volume block, several cipher blocks have to be combined.

Several working modes have been described for combining cipher blocks, the most often used perhaps being CBC (Cipher Block Chaining). In the CBC mode, the ciphertext of the preceding block is combined to the plaintext of the following block using an exclusive OR (XOR) operation. If the size of the plaintext is not divisible by the size of the cipher block when using the CBC mode, the last block must be processed before encryption using, for example, the Ciphertext Stealing method. When changing file size afterwards, Ciphertext Stealing requires re-encryption using the original plaintext.

**Thirdly, a stream cipher technique is discussed below.**

The encryption of plaintext block by block was described above. Another common way is the Stream Cipher method wherein plaintext is generally appended with a pseudorandom key stream using an XOR operation (the exact name of the method is "Additive Stream Cipher"). If the key stream is not identified, the restoring of plaintext cannot be done.

**Fourthly, message authentication codes (MAC) are discussed below.**

Let us start by specifying the term "hash": A hash identifies data content with a data size that is smaller than the original data content. A characteristic of a good hash is that two data blocks of whatever similarity cannot produce the same hash. Another characteristic of a good hash is the distribution of control numbers over the whole number space in use.

Using non-linear transformations, such secure hashes can be produced in which the transformation only works in one direction. Additionally, it is difficult to specify a data content that produces the exact wanted secure hash. A hash can therefore be considered a control number that cannot be used to restore the actual data. Methods generally in use include, for example, SHA-256 and RIPEMD-160. These are generally considered good hashes.

Hashes can also be calculated in encrypted format, in which case they are typically message authentication codes (MAC = Message Authentication Code). Below follows discussion of Figure 1. A method for calculating an authentication code is CMAC (NIST Special Publication 800-38B, 2005, National Institute of Standards and Technology, USA) that uses block cipher. CMAC divides the given encryption key K into two auxiliary keys K1 (106) and K2 (110) which are used when forming the authentication code (108). In CMAC, a plaintext block (101) is partitioned into character strings (102, 103, 104, and 109) of the size of the cipher block which are then input to the CBC mode concatenated encryption blocks (105). An XOR operation with the auxiliary key K1 (106) is executed on the last character string (104) of the plaintext block, if the last character string (104) is of same size with the cipher block. In other cases, the last character string is complemented to a full cipher block size with the bit 1 and the null bits following it, after which an XOR operation is executed with the auxiliary key K2 (110). The outcome is once more encrypted using the output encryption block (107) to yield an authentication code (108). The CMAC executing function that processes $i^{th}$ consecutive character strings with the key K, beginning from the start of the plaintext block M, is as follows:

$$CMAC_K(M,i) = CMAC_K( M_1 \parallel M_2 \parallel \ldots \parallel M_i ), \qquad (i)$$

where the operator || indicates the combination of two character strings.

Let it be noted that an authentication code can also be produced using a hash function, for example, using the HMAC method as follows:

$$HMAC(K,M) = H( (K \oplus opad) \parallel H( (K \oplus ipad) \parallel M ) ), \qquad (ii)$$

where opad and ipad are certain standard character strings, H is a hash function, K is a key and M is a message (for example, in plaintext format) HMAC is calculated from.

**Fifthly, errors in ciphertext are discussed below.**

Ciphertext may be missing data either on purpose or accidentally. In general, it is desirable to minimize the effect of missing data, for example, the characteristics of the aforementioned CMC mode include that when ciphertext is incorrect for a single cipher block, when restoring plaintext, the error is only reflected on the same and the next plaintext block.

When decrypting a stream ciphered ciphertext an error in the ciphertext produces an error in the corresponding position in the plaintext. If ciphertext is missing data or there is too much data, the mutual synchronization between the keystream and the ciphertext is lost, which results into all the restored plaintext after the error to be defective.

To avoid synchronization errors in decrypting the stream-ciphered ciphertext, a general procedure is used where created ciphertext is used to create a "self-synchronizing keystream". Instead, plaintext is not as well suited for synchronization and it is not generally used.

In certain situations it is, however, desirable that an error produced in ciphertext on purpose is propagated to as large portion of the plaintext as possible.

**Sixthly, CTR encryption mode is discussed below.**

Below, **Figure 2** is discussed. CTR encryption mode (NIST Special Publication 800-38A, 2005, National Institute of Standards and Technology, USA) uses an encryption block (105) to the input of which is input a figure that is not repeated (201) and that is available in data restoring phase, in its simplest form a digit that is always one unit larger than the last one. The output of a encryption block is coupled to a single plaintext character string (103) of the same size as the cipher block using an XOR operation, whereby the final result is a ciphertext character string (202).

One of the significant benefits of the CTR encryption mode is that it can be used to encrypt such plaintexts the size of which is not divisible by the size of the cipher block. Truncating a file afterwards is possible, too.

**Seventhly, data integrity is discussed below.**

In practice, all block mode data volumes contain some extra information on the basis of which it is deductible whether the content read from the data volume has remained unchanged.

Traditionally, control numbers have been calculated for data blocks to ensure their data validity. For example, when saving each block on a hard drive, a control number is calculated on hardware level and saved with the block on the hard drive. When reading the block from the drive, the block control number is also read. If it does not match with the rest of the data in the block, either the data reading or writing can be found to have occurred incorrectly. Generally, for this purpose a CRC check sum has been used.

When the content of a block mode data volume is being encrypted, the content of the block exports the same mode when it's encrypted and unencrypted. Accordingly, there is no space in blocks for such extra information that could be used to confirm the success of encryption or decryption.

**Eightly, network servers are discussed.**

An Internet connection is currently available almost everywhere, although it is not necessarily a broadband connection. For IP (Internet Protocol) data transfer between computers, secure protocols haven developed for which open source code libraries are available. For example, an OpenSSL library of open source code provides for SSL/TLS protocol support.

**Ninthly, here follows discussion of file processing.**

**Figure 3** shows a Windows operating system related model of how applications (301), such as Microsoft Word, write files onto a data volume (308). Roughly speaking, the file system driver stack (306) determines data location based on the file name and the internal location of the file. In the file system driver stack, data is being processed as sections of files, whereas the data volume driver stack (307) processes data as data volume blocks. In Windows operating systems, applications (302) and part of the operating system services (303) belong to usermode (304), whereas most drivers comply with kernelmode (305). To specify more clearly, although above - for clarity - it was mentioned that an application saved data, also, for example, operating system services and several programs in the driver stack may save and read files.

In the latest Windows operating systems, there are several interfaces for processing writable and readable data, the simplest of which is probably Minifilter. A person of the art may get a clear idea of Minifilter implementations through the model programs in the available Windows Development Kit, especially the Minispy application in which communication between usermode and kernelmode has been implemented.

**Tenthly, below follows discussion of saving data in a data volume.**

In commonly used file systems, such as FAT, FAT32, exFAT, and NTFS, file size is determined by two alternative ways: If file writing is ends in a position which is greater than the preceding file size, file size is updated to reflect the end of the whole writing task. In the second place, file size can be determined explicitly to either a greater or a smaller size than the preceding file size.

There are two types of writing operations in Windows operating system driver stacks: cached and non-cached. A file system driver stack assigns the data to be saved to a data volume driver stack in a non-cached format and block by block as IRP (I/O Request Packet) messages. File size is typically determined either based on cached writing operations or explicit file size determinations.

Especially in Windows operating system driver stacks, there is a certain problem related to multilevel caching: If data to be written is modified in a driver stack, the modified data may, due to some anomalous situations, appear unmodified in the writing phase. This occurs, for example, in Windows XP/Vista operating system Minifilter implementations in NTFS file systems with small-sized files.

A fundamental problem occurs in situations where data to be written has been encrypted using block cipher and where file size is indivisible by the cipher block size. A special problem occurs in situations where file size is afterwards truncated as regards to a cipher block to an indivisible size, when writing operations have already been executed. In this case, data is lost in the last cipher block and the cipher block in question cannot be restored.

**Finally, in the following the concept of entropy is reviewed.**

Information entropy indicates the smallest possible bit number with which certain data can be represented. The entropy of a random number sequence is as large as the amount of numbers contained in it multiplied by the bit number of a single number.

The entropy of a completely pseudorandom number sequence corresponds to the entropy of a random number sequence, unless the production method of pseudorandom numbers is revealed. If it is revealed in its entirety, entropy is zero because in this case all values can be calculated unambiguously. U.S. Patent Application Publication US 2003/0108196 to Kirichenko (published Jun. 12, 2003) discloses a method of encrypting a data unit comprising the steps of dividing the data unit into a series of data blocks, and for each data block, applying a block cipher function to a data block counter value to generate an encrypted block counter value, performing a logical operation to combine the encrypted block counter with the data block, and applying a block cipher function to the combined data. U.S. Patent 4,815,130 to Lee et al. (published Mar. 21, 1989) discloses a cipher system in which a key is initially inserted into a shift register and the serial output of the shift register is added to the plain text message and the sum is fed back into the serial input of the shift register. Parallel outputs of the shift register are led to a logic function which transforms the multiple inputs into a single output, the value of which is evenly distributed among the possible combinations on the input. The logic function output is then added to the message to produce the enciphered message. U.S. Patent Application Publication US2009/0034715 to Ramasamy et al. (published Feb. 5, 2009) discloses a method of encrypting data by generating a hash for data block X-, and a hash of a key. An initialization vector for data block X is generated using the cryptographic hash and the hash of the encryption key. Data block X-1 and data block X are logically contiguous and data block X-1 logically precedes data block X. Encryption data for data block X is generated from unencrypted data for data block X using the initialization vector.

**Objectives of the Invention**

A primary object of the invention is to enable changing the size of an encrypted file afterwards.
Further, another primary object of the invention is to protect data, preferably in such a way that the entropy in it is reduced by insufficiently saving the data in a protectable data volume, a small section of it being saved in another data volume.
A secondary objective of the invention may be to improve data reliability using a procedure where the integrity of encrypted data can be reliably authenticated.

**Brief Summary of the Invention**

A data volume to be encrypted comprises of a group of equal-size blocks. Each block is divided into equal-length plaintext character strings and then each plaintext character string is encrypted with a proper state-of-art encryption block generating a key stream that is XORed with the plaintext character string to be encrypted, which results in a cipher text character string. The invention is based on that the current plaintext character string or later plaintext character strings has no influence on encryption of the current plaintext character string, more precisely on the above-mentioned key stream, but only the previous plaintext character string or earlier plaintext character strings affect. This is implemented so that to the input of the encryption block is fed a hash value formed from one or more of the earlier plaintext character strings. Thereby the encryption block generates, according to its encryption algorithm, the key stream based on a key and the hash value.
The hash value is a message authentication code MAC calculated from at least one of the plaintext character strings preceding the plaintext character string to be encrypted
. Alternatively, the hash value is a cipher-based message authentication code CMAC calculated from at least one of the plaintext character strings preceding the plaintext character string to be encrypted
The algorithm for calculating the MAC or CMAC of a plaintext character string is using a key. According to the further aspect of the invention; the MAC or CMAC of the preceding plaintext character string is used as the key. Thus, because the MAC or CMAC of the plaintext character string prior to said preceding plaintext character string has been used as the key for the MAC or CMAC of said preceding plaintext, etc., it can be stated that on a key used for calculating the MAC or CMAC of any plaintext character string is influenced by the MACs or CMACs of all the preceding plaintext character strings.
Preferably, the block cipher operates in Counter mode (CTR mode). A Hash of at least one of the plaintext character strings preceding the plaintext character string to be encrypted is applied to the Counter input of the encryption block. Preferably the encryption algorithm is AES, AES256 for example, wherein the encryption block is the known AES Counter mode Block cipher.
An aspect of the method may be the partition of the said ciphertext block into at least two sections of different sizes.
An aspect of the method may further include writing the file derived from plaintext blocks onto at least two memory devices, the first of which may be, for example, SSD based and in which at least the largest of the ciphertext block sections is saved as a file. The first memory device may be connected to a first computer, for example, a Windows workstation.
The method may further include the steps of connecting a second computer to the first computer via, for example, an information network, such as an IP protocol using network, and authorizing this connection based on either the said first computer, its user, or the said first memory device.

The method may also include the steps of saving at least the smallest of the ciphertext block sections in the said second computer.

Another aspect of the invention is a system executing the method, characterized by that it contains at least two memory devices onto which the said ciphertext block sections are saved.

The third aspect of the invention is a computer program executing the method, characterized by that it can create a ciphertext block from a plaintext block consisting of more than one consecutive character strings in such a way that, when creating the ciphertext block, at least one of the character strings in question is modified based on a hash derived from more than one preceding character strings included in the plaintext block.

**Brief Description of the Drawings**

| | |
|---|---|
| Figure 1 | depicts the CMAC method of prior art for calculating an authentication code, |
| Figure 2 | depicts data encryption in accordance with the CTR mode of prior art, |
| Figure 3 | depicts a concept of prior art of saving data in a data volume, |
| Figure 4 | depicts an encryption arrangement of data according to an embodiment of invention, |
| Figure 5 | depicts a decryption arrangement of Figure 4 corresponding to a data encryption arrangement of an embodiment of the invention, |
| Figure 6 | depicts the combination of the CMAC method and the CTR mode according to an embodiment of the invention, |
| Figure 7 | depicts the initiation of an arrangement according to an embodiment of the invention, |
| Figure 8 | depicts the optimized combination of the CMAC method and the CTR mode according to an embodiment of the invention, |
| Figure 9 | depicts a chart of components according to an embodiment of invention, |
| Figure 10 | depicts a chart of data distribution according to an embodiment of invention, |
| Figure 11 | depicts a data encryption arrangement according to an embodiment of invention, |
| Figure 12 | depicts the implementation of an embodiment of the invention in a Windows™ environment, |
| Figure 13 | illustrates the basic principle of the invention, and |
| Figure 14 | illustrates the use of an authentication code in CTR -mode. |

**Detailed Description of the Invention**

**Figures 1, 2, and 3** describing the prior art have been explained in the section "Background of the Invention". In the following, the invention is illustrated using its different embodiments and figures derived from them.

**FIG. 13** illustrates the basic principle of the invention. As in the state of art, a plaintext block that is to be encrypted is first broken into equal-size plaintext character strings M1, M2, M3,..,Mn. The length of the string is equal to the block size of the block cipher operating on Counter mode. The final string needs not to be of same size as other strings, but the amount of the bits in this string may be less than in the other strings. Thereafter each block is encrypted plaintext character string by plaintext character string so that a key stream generated by the encryption block is XORed with the plaintext character string. The encryption block generates according to its cipher algorithm the key stream based on the hash value applied to the Counter input and a key. In its simplest form the hash has been formed from the preceding plaintext character string only without using an encryption key.

When encrypting plaint text character strings it is extremely important to ensure that the same value is never applied to the counter input twice. Probability of two same values is almost zero if the has is formed as a secure hash. Reference is made to **Fig. 14** illustrating encryption of plaint text character string M3. Cipher Ek is a known encryption block operating on Counter mode. A cryptographic Hash value formed from preceding plaintext character string M2 is fed to the counter input. MAC or CMAC algorithm, for example, having plaintext character string M2 and key Key2 as the inputs, generates this secure Hash. Key2, which is used as the key, is the secure Hash of previous plaintext character string M1. The secure Hash of plaintext character string M2 is fed to encryption block Ek that generates key stream Keystream3. It is combined by XOR operation with the bits of the plaintext character string M3 whereupon the result is cipher text string C3.

In this manner all plaintext character strings are encrypted. However, encryption of the first plaintext character string requires the use of an initialization vector as the secure Hash. In other words, when encrypting any plaintext character string the secure Hash is formed from the preceding plaintext character string using as the key the secure Hash of the previous plaintext character string. Therefore it can be stated that on the secure Hash used in encryption of a plaintext character string has been influenced by the Hash values of all preceding plaintext strings, but the plaintext character string to be encrypted has no influence on generating of the key stream used in encryption of said plaintext character string.

In a preferred embodiment of the invention, at least the first character string $C_1$ or part of it can be saved from a ciphertext block in a second memory device. Further, in a preferred embodiment the encryption is performed on a file by file basis in such a way that each cipher text block is saved in the same place in a file as the corresponding plaintext block would otherwise have been saved in. A person of the art is, for example, able to implement the Minifilter driver executing the Windows operating system encryption; the driver encrypts the file contents as described in the invention and maintains the original file name.

In the invention, encryption keys are preferably file-specific, they are also preferably saved on a second memory device.

Let us first look at Figure 4 and the operation of the encryption method (408) described in the invention in a preferred embodiment of the invention: In the embodiment represented by Figure 4, each plaintext character string (103) is modified based on the value of a mask function $f_G$ (401). The internal state of the mask function (403) is maintained in a delay buffer. The internal state (403) is revealed to the outside of the mask function via the output functions $f_O$ (404) and $f_T$ (406). The modifying of the $i^{th}$ character string (103) of the plaintext into a ciphertext character string (202) is performed using a modification function $f_M$ (407) the second parameter of which is the value of the mask function $f_G$ (401).

$$C_i = f_M( M_i, f_G(M,i) ) \qquad \text{(iii)}$$

The modification function (407) may preferably by an XOR operation; it is desirable that the plaintext character string (103) contains as many bytes as the value of the mask function (401). Other modification functions may also be used; it is essential that no such data following a ciphertext (202) or a plaintext character string (103), which might afterwards be truncated from the character string (202), may affect any values of the character string (202) within the modification function.

The next state of the mask function is provided by the function $f_{NS}$ (402) which is backfed via the delay buffer maintaining the inner state (403). Let us describe the value of the function $f_{NS}$ using the designation $f_{NS}(M,i)$ when processing the $i^{th}$ character string:

$$f_{NS}(M,i) = f_{NS}( M_i, f_{NS}(i-1) ) \qquad \text{(iv)}$$

Therefore, it is essential for the invention that the value of the mask function $f_G$ (401), when processing the $i^{th}$ character string, is not dependent of the $i^{th}$ plaintext character string but of the initial value $z^{-1}_0$ of the inner state (403) and of at least one possibly preceding character string, preferably for the invention, on all the preceding character strings of the same plaintext block. Let us designate:

$$f_G(M,i) = f_G( z^{-1}_0 \parallel M_1 \parallel M_2 \parallel \ldots \parallel M_{i-1} ) \qquad \text{(v)}$$

A preferred embodiment of the invention described in Fig. 4 illustrates a functional block (405) processing the inner state, the block calculating the message authentication code formed by the preceding plaintext character strings. The calculation of the authentication code typically involves an output function $f_O$ (404) of the inner state illustrated in the figure for generalization. It shall be noted that the output function $f_O$ (404) is not necessarily required if the output function $f_T$ is considered to provide an adequate protection against the revealing of the inner state.

Further, let it be emphasized that although in **Figure 4** the inner state (403) is maintained in a delay buffer, the figure is conceptual in terms of the delay positioning, as a person of the art may plan different delay solutions in this invention: Essential for the mask function $f_G$ (401) described in the invention is that its value, when processing the $i^{th}$ character string, is independent of the $i^{th}$ plaintext character string and dependent of the inner state initial value and of at least one preceding character string.

Figure 5 is discussed below. It represents a preferred decryption from a ciphertext character string $C_i$ (202) to a plaintext character string $M'_i$ (502) corresponding to Fig. 4. The ciphertext block is processed with an invert function (501) of the the modification function, its second parameter being the value of the same mask function (401) used also in encryption.

$$M'_i = f_M^{-1}( C_i, f_G(M,i) ) \quad \text{(vi)}$$

Because the value of the mask function $f_G$ (401), when processing the $i^{th}$ character string, is independent of the current plaintext character string and dependent only of $z^{-1}_0$ and the preceding character strings, the ciphertext block may be truncated from the middle of the $i^{th}$ character string, the value of the mask function $f_G$ (401) still being calculatable (cf. formula v).

Further, in the following the inverted function $f_M^{-1}$ (501) of the modification function $f_M$ is discussed: Because in the modification function $f_M$ no such piece of information following a ciphertext (202) or a plaintext character string (502), which might afterwards be truncated from the character string (202), may affect any values of the character string (202), an inverted function may also be calculated for truncated character strings. A preferred embodiment of the invention uses an XOR operation as the modification function $f_M$, the inverted function $f_M^{-1}$ of which is also XOR.

Below follows discussion of Figure 6. In Figure 6, preferably for the invention, a CTR mode complying XOR operation has been defined as the modification function (407), the output function (406) containing a encryption block (107) according to the CTR mode.

In the preferred embodiment of the invention represented in Figure 6, CMAC mode has been redrawn using the drawing style of the mask function (401) shown in **Figure 4.** CMAC operation has been delayed with a single character string using a plaintext delay (601). As mentioned before, a person of the art may plan different delay solutions. In fact, the inner state (403) in **Figure 4** is an XOR operation of the plaintext delay (601) and the cipher block delay (602) in Figure 6. Modification function $f_M$ (407) is a CTR mode complying XOR operation the inverted function $f^{-1}_M$ (cf. 501 in Figure 5) of which is XOR as well.

Especially noteworthy in a preferred embodiment of the invention shown in Figure 6 is that the output function (406) is simultaneously both the encryption block (107 in Figure 1) of the output of the CMAC method and the CTR encryption mode encryption block (105 in Figure 2).

A review of the CMAC-CTR combination follows: To make the algorithm identical with the original CMAC, plaintext delay (601) and cipher block delay (602) could simply be initialized in such a way that, when processing the first plaintext character string, an XOR operation between their modes results in a null processed with decryption of its encryption (105). In this case, when the plaintext delay (601) gives a first plaintext character string $M_1$, the output of the cipher block delay (602) would be null and the block processing would be in accordance with CMAC.

However, this procedure would include a vulnerability: Even if the first character string $C_1$ from the ciphertext block was only saved in a second memory device, the value of the output function (406) would be same for each first character string. Further, if the same keys are used to process several ciphertext blocks, it would be completely possible to have blocks where the first character string $M_1$ of the plaintext block would be the same, which would result into an identical ciphertext block $C_1$. Hence, known ciphertext blocks $C_1$ could be adapted into the place of unknown ciphertext blocks $C_1$: Thus, with a good guess or abundant tests, at least the protection of the character string $M_2$ could be weakened.

Using the teaching of the CTR mode and as a solution to this vulnerability, preferably for the invention, plaintext delay (601) and cipher block delay (602) can be initialized in such a way that an XOR operation between them produces a unique number. In practice, for example, plaintext delay (601) can be initialized as null and cipher block delay (602) initialized using such a counter that does not produce two same figures for plaintext blocks within a reasonable timeframe. A person of the art may, when implementing the counter, use a CTR mode counter as a basis.

In terms of the security of the invention, it is preferred that the same encryption key/counter value combination is practically never repeated. If the invention is implemented as a Minifilter implementation, each file may be given its own encryption keys and the counter may be derived from the location where the data block in question is written to.

Referring to the example of Figure 7, below is discussed a preferred implementation of the counter to initialize inner state (403) for each first character string $M_1$: Because the encryption block $E_K$ (105) and the decryption function $D_K$ (702) are inverted functions of each other, their combination (703) yields the value of the counter. Therefore, if the inner state initial value $z^{-1}_0$ is the value of the aforementioned counter (701) which has been processed with a decryption operation, i.e.

$$z^{-1}_0 = \text{Counter} \quad \text{(vii)}$$

In this case, CMAC in fact produces an authentication code from the character string that is logically the value of the counter when processed with a decryption function and appended with the preceding character strings of the same plaintext block.

$$CMAC_K(i-1) = CMAC_K( D_K(Counter) \| P_1 \| P_2 \| ... \| P_{i-1} ), \quad (viii)$$

In other words, it is still a CMAC method described in NIST Special Publication 800-38B; even if a counter was appended to it, only the value derived from the counter would be inserted in front of the data. Further, let it be noted that in Figure 7 the self-annulling combination (703) has only been represented for this uniformity review and its implementation is not technically appropriate.

Thus, the character string $C_1$ (704) of the first ciphertext is:

$$C_1 = P_1 \oplus CMAC( D_K(Counter) ) \quad (ix)$$

The discussion of the embodiment represented in Figure 6 is continued below. The output function $f_T$ (406) is a block cipher arrangement according to CMAC wherein, before the encryption block (107), an XOR operation is executed on the internal state (403) with the auxilisary key $K_x$ (603) derived from the encryption key K (604). As the character strings to be written are full-length strings in IRP messages of Windows, when complying with CMAC, $K_x$ is the auxiliary key $K_1$ and the auxiliary key $K_2$ is not required. In applications where a character string does not cover the whole cipher block, $K_x$ for an incomplete block is not required as the value of the output function (406) would only be required to encrypt the next character string. Thus, $K_2$ is left unused.

When processing the first character string $M_1$, use of $K_2$ in the output function (404) instead of $K_1$ may be preferred for the invention because, as noted below, at least the first character string or a part of it can be saved only in another memory device. In this case, neither of the memory devices has to contain character strings processed both with $K_1$ and $K_2$. Since $K_2$ is from internal state (403 in Fig. 4), i.e. it is independent of the XOR of plaintext delay (601) and ciphertext delay (602), the result of the XOR operation of $K_1$ and internal state is as random as the result of the XOR operation of $K_2$ and internal state. Thus, $K_2$ may be used instead of $K_1$ when encrypting the first character string $M_1$.

In the embodiment shown in Fig. 6, CMAC produces an authentication code after each character string. It is preferable for the invention that if the used encryption block (107) is of good quality, such as EAS, internal state (403) is evenly distributed over the whole number space in use due to the bijectivity of both the authentication code and the encryption block. As a consequence of this, CTR mode can safely be used as shown in this embodiment of the invention:

For the safety of the CTR mode, it is essential that the same value of the counter is not repeated. According to a birth date paradox well know to a person of the art, when using a 16-byte cipher block, for example, the counter gets two exactly same values with a probability of 50% only when approximately 300 exabytes ($300x10^{18}$ bytes) have been written. This is believed to be enough for any imaginable applications.

Let us discuss Fig. 8 which represents a functionally similar but more optimized version to that of the embodiment shown in Fig. 6: The plaintext delay (601) and the cipher block delay (602) of Fig. 6 have been combined into a delay buffer maintaining the inner state (403). Especially noteworthy in this preferred embodiment of the invention is the maintaining of the inner state (403) in a delay buffer, and for this reason the value of the mask function (401) when processing the $i^{th}$ character string is still

$$F_G(i) = CMAC_K(i-1) \quad (x)$$

In other words, the output of CMAC has been delayed with a single character string, as is also the case in the embodiment shown in Fig. 6.

When striving for a simple implementation, the inner state initial value $z^{-1}_0$ is preferably initialized with the value of the counter (701) described for Fig. 7, i.e.

$$z^{-1}_0 = Counter \quad (xi)$$

whereby the review in Fig. 7 relating to the safe combination of CMAC and CTR still applies.

Below follows discussion of **Figure 9.** As above mentioned, in a preferred embodiment of the invention at least the first character string $C_1$ or part of it is saved from a ciphertext block in another memory device. Because the decryption of the ciphertext character string $C_i$ requires the already decrypted character strings $M_1$ - $M_{i-1}$, it is preferred to transfer data onto a second memory device specifically from the beginning of the ciphertext block. This data is thus preferably removed from the first memory device (901), which functions as the primary ciphertext storage medium. Proceeding in this way, access to plaintext can be adjusted by allowing and denying access to the second memory device (902).

**In Figure 9,** a preferred concept is represented where the data written by a software (301) is processed, for example, in a driver stack (306) processing a Windows file system; the driver stack partitions the data onto two separate memory devices, the first (901) and the second (902) one. When an application reads data, it is accordingly combined from the data read from the first (901) and the second (902) memory device. In this description, for clarity, the term "application" is used; it is apparent to a person of the art that also, for example, operating system services and several programs in a driver stack can save and read data similarly as any applications.

It should probably be noted that a person of the art is easily able to implement a method where data partitioned into several sections is combined to form the original data, as long as the way partitioning was executed is well specified. Similarly, it should probably be noted that a person of the art is easily able to implement data partitioning into more than two sections if there is a need for partitioning data into several sections.

Below follows discussion of **Figure 10** which represents more accurately a preferred way of partitioning data onto two memory devices using the inventive method. A file (1001) to be written is partitioned in a driver stack processing the file system into plaintext blocks of identical size (101) which are further partitioned into character strings of the same size (103). Each plaintext block is encrypted using the encryption (408) described above, by transforming the plaintext block (101) into cyphertext character strings (202). In a preferred embodiment of the invention, it is preferred to remove from the file (1006) to be saved in the first memory device (901) the first ciphertext character string (1005) corresponding to each plaintext block and to save it in another memory device (902).

For all the embodiments of the invention, it is preferred that restoring of each cipher text character string is affected by the data removed from the first memory device and saved in the second memory device.

At the same time, space is freed from the data (004) saved in the first memory device in those locations where data was removed and transferred onto the second memory device (902). In the invention, it is preferred to replace the ciphertext character string (1005) removed from the data saved in the first memory device with an authentication tag (1002) using which, in the reading phase, the encryption status of the block can at least be indicated. Proceeding in this manner, especially those situations occurring in Windows operation systems can be avoided where caching restores - yet in an unencrypted format - data presumed to be encrypted.

In a preferred embodiment of the invention, the authentication tag(1002) is appended with the data (1003) required for checking integrity. This integrity check data (1003) is preferably calculated using a secure hash describing the contents of a plaintext block (101), the hash using a key not used in block ciphering. The key of the said hash is preferably derived from the key used in encryption; additionally, it has to be remembered that the above mentioned key $K_2$ is available for use. A person of the art is able to plan integrity check data (1003) in such a way that the data required for checking integrity does neither reveal the key nor the fact whether there are two blocks with same content on the memory device. A preferred way of confirming that no blocks with the same content are revealed is to append a character string, for example, in its beginning, before integrity calculation, with such data unique for each encryption key which is known in reading phase before decryption. This data can, for example, be derived from a plaintext block (101) sequence number within a file and possibly from a file-specific tag.

It has to be noted that the file may be truncated also on the encryption tag (1002) whereby it is preferred to make a conclusion in the writing phase based only on the first section. If the beginning of an encryption tag is broken in two matches and the preceding block had been encrypted, the beginning of a cipher mode block is retrieved from another memory device (902). It is preferred that the encryption tag (1002) starts with a clearly identifiable character string: If the original file (1001), and thus also the encrypted file (1006), is smaller than the encryption tag, accordingly it a conclusion may be made based on, for example, whether or not the other files of the same type included in the same first memory device (901) are encrypted on default. In case the file is small, a person skilled in the art may have to make case-specific conclusions although it has to be remembered that in practical planning it is preferable to strictly define which files are to be protected by the invention and which not - an exception to this indicates as such an error condition.

Because in this preferred embodiment of the invention data is removed from the beginning of the cipher text blocks saved in a memory device, it is further preferred, in terms of the invention, that the removed data affects the restoring of all the other character strings from the same plaintext block.

Let us further look at the preferred embodiment presented in **Figure 11** which is derived from the teaching originated in connection with Figures 4 and 7 for using a counter. In general, the CTR encryption mode presented in the NIST Special Publication 800-38A is considered safe if the encryption block (105) used in it, and presented also in Figure 2, is safe. For example, AES-256 is generally considered a safe encryption block. In addition, the value of the counter (701) may not be repeated. In an embodiment of the invention preferred in terms of its performance, although more limited in terms of its data security, the value of the counter is produced using a hash algorithm faster than CMAC, but cryptographically less powerful, as long as the output function (406) is a proven encryption block (1101), such as AES. A faster hash algorithm may be added to the key using, for example, the said HMAC method. Additionally, it is preferable to note the above-described teaching related to using the counter for formatting an internal state.

Finally, below follows discussion of an embodiment of the invention presented in **Figure 12** in a Windows™ environment. Using data communications protocols from driver programs, especially from Minifilter implementations, is inconvenient which is why it is maybe easier to implement alongside the Minifilter (1201) executing the encryption algorithm of the invention a usermode communication software (1202) acting as a Windows service for the IP communication possibly required by the server acting as a second memory device (902). Data transfer between kernelmode (305) and usermode (304) is taught by Windows Installable File System Development Kit's model project called FileSpy. A person skilled in the art is able to implement the IP communications in accordance with the prior art to authenticate access based on a user, first memory device, or a computer. In addition, a person skilled in the art is able to encrypt data communications, for example, using established practices, such as SSL/TLS.

In the description of the invention thus far, only file truncation has been mentioned. Let it be noted that extending a file is also possible. In general, data is written in the truncated part of the file afterwards. This, as well as other data volume writings, is performed on a block by block basis whereby the protection described as the invention functions normally. If the file is only extended and not written on, the file content is generally unspecified in terms of the extension and its contents is not to be trusted. Accordingly, the application of the invention does not essentially weaken the functioning of the memory device - not even in terms of file extension.

Modifications of the invention are easily made based on the description and guided by the represented representative embodiments. Data can, for example, partitioned into more than two sections, and it may be removed from a primary data volume in different quantities. Additionally, for example, only one Windows™ based Minifilter implementation was represented as an embodiment of a driver software, however, the invention may also be used in other architectures utilizing the inventional concept presented here.

**Claims**

1. Method for creating a ciphertext block from a plaintext block, which is divided into a sequence ($M_1$, $M_2$,..., $M_n$) of consecutive plaintext character strings to be encrypted in succession, wherein a block cipher operating in Counter mode and having a counter input, an input for an encryption key (K) and an output from which a key stream is obtained, is used,
wherein the method comprises the steps of:

   using a hash function to generate a hash from at least the first previous plaintext character string ($M_{j-1}$) preceding in the sequence a plaintext character string ($M_j$) to be encrypted,
   applying the hash to the counter input of the block cipher, and
   feeding the plaintext character string ($M_j$) to be encrypted and the key stream as inputs to a XOR-function that outputs a cipher text character string ($C_j$),
   wherein the hash used in encryption of the plaintext character string ($M_j$) is independent of said plaintext character string ($M_j$) and the subsequent plaintext character strings ($M_{j+1}$,..., $M_n$).

2. The method according to claim 1, wherein the encryption block operates in AES-Counter mode.

3. The method according to claim 1, wherein the hash function is a cryptographic Hash algorithm.

4. The method according to claim 1, wherein the hash generated by the hash function is a message authentication code (MAC) or cipher-based message authentication code (CMAC).

5. The method according to claim 3 or 4, wherein a message authentication code (MAC; CMAC), which is formed from the second previous plaintext character string ($M_{j-2}$) preceding in the sequence the plaintext character string ($M_j$) to be encrypted, is used as a key for the message authentication code, wherein the key includes influence of all previous message authentication codes.

6. The method according to claim 1, wherein at least one of the said cipher text blocks is partitioned into at least two sections of different size, which are saved in separate memory devices.

7. The method according to claim 1, wherein the first cipher text character string ($C_i$) formed from the first plain text character string ($M_j$) of the plaintext block is stored in a second memory device and other cipher text character strings ($C_1$, $C_2$,..., $C_n$) are stored in a first memory device.

**8.** The method according to claim 6 or 7, wherein the first memory device is a removable memory connected to a first computer, and the second memory is connected to a second computer, wherein the first computer can be connected to a second computer via a telecommunication network for obtaining the other cipher text character strings stored therein.

**9.** Arrangement for creating a cipher text block from a plaintext block, which is divided into a sequence ($M_1$, $M_2$,..., $M_n$) of consecutive plaintext character strings to be encrypted in succession, wherein the arrangement comprises:

a hash generating element that is adapted to generate a hash value from at least the previous plaintext character string ($M_{j-1}$) preceding a plaintext character string ($M_j$) to be encrypted,
a block cipher element operating in Counter mode and having a counter input, an input for an encryption key and an output, wherein said block cipher is adapted to generate a key stream from the output in response to the hash value fed to the counter input and a key (K) fed to the key input,
means for performing a XOR-function to form a ciphertext character string ($C_j$) in response to the plaintext character string ($M_j$) to be encrypted and the key stream applied to the means, wherein the hash value used in encryption of the plaintext character string ($M_j$) is independent of said plaintext character string ($M_j$) and the subsequent plaintext character strings ($M_{j+1}$,..., $M_n$).

**10.** The arrangement according to claim 9, wherein the block cipher is adapted to operate in AES-Counter mode.

**11.** The arrangement according to claim 9, wherein the hash generating element is adapted to generate one of a message authentication code (MAC), cipher-based message authentication code (CMAC).

**12.** The arrangement according to claim 11, wherein a message authentication code (MAC; CMAC), which is formed from the second previous plaintext character string in the sequence, preceding the plaintext character string to be encrypted, is used as a key for the message authentication code, wherein the key includes influence of all previous message authentication codes.

**13.** The arrangement according to claim 9, further comprising means for storing the first cipher text character string formed from the first plaintext character string of the plaintext block in a second memory device and other cipher text character strings in a first memory device.

**14.** A computer program for encrypting successive plaintext character strings ($M_1$, $M_2$,..., $M_n$), comprising:

a hash generating element enabled to generate a hash value from at least one of the previous plaintext character strings ($M_1$,..., $M_{j-1}$) preceding the plaintext character string ($M_j$) currently being encrypted,
a block cipher element operating in Counter mode, adapted to form a key stream in response to the hash value fed to a counter input and an encryption key fed to a key input,
an element adapted to perform a XOR-function, which produces a cipher text character string ($C_j$) in response to the plaintext character string ($M_j$) to be encrypted and the key stream, wherein the hash value used in the encryption of the plaintext character string currently being encrypted ($M_j$) is independent of said plaintext character string ($M_j$) and the subsequent plaintext character strings ($m_{j+1}$,..., $M_n$).

**15.** The computer program as in claim 14, wherein the hash generating element runs a MAC or CMAC algorithm.

**Patentansprüche**

**1.** Verfahren zum Erzeugen eines Chiffretextblocks aus einem Klartextblock, der in eine Sequenz ($M_1$, $M_2$, ..., $M_n$) aus aufeinanderfolgenden Klartextzeichenketten, die nacheinander zu verschlüsseln sind, unterteilt ist, wobei eine Blockchiffre verwendet wird, die im Zählermodus arbeitet und einen Zählereingang, einen Eingang für einen Verschlüsselungsschlüssel (K) und einen Ausgang, aus dem ein Schlüssel-Stream erhalten wird, aufweist,
wobei das Verfahren folgende Schritte umfasst:

Verwenden einer Hash-Funktion zum Erzeugen eines Hash aus mindestens der ersten vorausgegangenen Klartextzeichenkette ($M_{j-1}$), die in der Sequenz einer zu verschlüsselnden Klartextzeichenkette ($M_j$) vorausgeht,
Anwenden des Hash auf den Zählereingang der Blockchiffre, und
Einspeisen der zu verschlüsselnden Klartextzeichenkette ($M_j$) und des Schlüssel-Streams als Eingänge in eine XOR-Funktion, die eine Chiffretextzeichenkette ($C_j$) ausgibt,
wobei der Hash, der beim Verschlüsseln der Klartextzeichenkette ($M_j$) verwendet wird, von der Klartextzeichenkette ($M_j$) und den anschließenden Klartext-zeichenketten ($M_{j+1}$, ..., $M_n$) unabhängig ist.

**2.** Verfahren nach Anspruch 1, wobei der Verschlüsselungsblock im AES-Zählermodus arbeitet.

**3.** Verfahren nach Anspruch 1, wobei die Hash-Funktion ein kryptografischer Hash-Algorithmus ist.

**4.** Verfahren nach Anspruch 1, wobei der durch die Hash-Funktion erzeugte Hash ein Message Authentication Code (MAC) oder ein Cipher-based Message Authentication Code (CMAC) ist.

**5.** Verfahren nach Anspruch 3 oder 4, wobei ein Message Authentication Code (MAC; CMAC), der aus der zweiten vorausgegangenen Klartextzeichenkette ($M_{j-2}$), die in der Sequenz der zu verschlüsselnden Klartextzeichenkette ($M_j$) vorausgeht, gebildet wird, als ein Schlüssel für den Message Authentication Code verwendet wird, wobei der Schlüssel den Einfluss aller vorausgegangenen Message Authentication Codes enthält.

**6.** Verfahren nach Anspruch 1, wobei mindestens einer der Chiffretextblöcke in mindestens zwei Sektionen von unterschiedlicher Größe unterteilt ist, die in separaten Speichervorrichtungen gespeichert werden.

**7.** Verfahren nach Anspruch 1, wobei die erste Chiffretextzeichenkette ($C_i$), die aus der ersten Klartextzeichenkette ($M_j$) des Klartextblocks gebildet wird, in einer zweiten Speichervorrichtung gespeichert wird und andere Chiffretextzeichenketten ($C_1$, $C_2$, ..., $C_n$) in einer ersten Speichervorrichtung gespeichert werden.

**8.** Verfahren nach Anspruch 6 oder 7, wobei die erste Speichervorrichtung ein Wechseldatenspeicher ist, der mit einem ersten Computer verbunden ist, und der zweite Speicher mit einem zweiten Computer verbunden ist, wobei der erste Computer über ein Telekommunikationsnetz mit einem zweiten Computer verbunden werden kann, um die anderen darin gespeicherten Chiffretextzeichenketten zu erhalten.

**9.** Anordnung zum Erzeugen eines Chiffretextblocks aus einem Klartextblock, der in eine Sequenz ($M_1$, $M_2$, ..., $M_n$) aus aufeinanderfolgenden Klartextzeichenketten, die nacheinander zu verschlüsseln sind, unterteilt ist, wobei die Anordnung Folgendes umfasst:

ein Hash-Erzeugungselement, das dafür ausgelegt ist, einen Hash-Wert aus mindestens der vorausgegangenen Klartextzeichenkette ($M_{j-1}$), die einer zu verschlüsselnden Klartextzeichenkette ($M_j$) vorausgeht, zu erzeugen,
ein Blockchiffreelement, das im Zählermodus arbeitet und einen Zählereingang, einen Eingang für einen Verschlüsselungsschlüssel und einen Ausgang aufweist, wobei die Blockchiffre dafür ausgelegt ist, in Reaktion auf den in den Zählereingang eingespeisten Hash-Wert und einen in den Schlüsseleingang eingespeisten Schlüssel (K) einen Schlüssel-Stream aus dem Ausgang zu erzeugen,
ein Mittel zum Ausführen einer XOR-Funktion zum Bilden einer Chiffretextzeichenkette ($C_j$) in Reaktion auf die zu verschlüsselnde Klartextzeichenkette ($M_j$) und den in das Mittel eingespeisten Schlüssel-Stream, wobei der Hash-Wert, der beim Verschlüsseln der Klartextzeichenkette ($M_j$) verwendet wird, von der Klartextzeichenkette ($M_j$) und den anschließenden Klartextzeichenketten ($M_{j+1}$, ..., $M_n$) unabhängig ist.

**10.** Anordnung nach Anspruch 9, wobei die Blockchiffre dafür ausgelegt ist, im AES-Zählermodus zu arbeiten.

**11.** Anordnung nach Anspruch 9, wobei das Hash-Erzeugungselement dafür ausgelegt ist, einen Message Authentication Code (MAC) oder einen Cipher-based Message Authentication Code (CMAC) zu erzeugen.

**12.** Anordnung nach Anspruch 11, wobei ein Message Authentication Code (MAC; CMAC), der aus der zweiten vorausgegangenen Klartextzeichenkette in der Sequenz, die der zu verschlüsselnden Klartextzeichenkette vorausgeht, gebildet wird, als ein Schlüssel für den Message Authentication Code verwendet wird, wobei der Schlüssel den Einfluss aller vorausgegangenen Message Authentication Codes enthält.

**13.** Anordnung nach Anspruch 9, die des Weiteren ein Mittel zum Speichern der ersten Chiffretextzeichenkette, die aus der ersten Klartextzeichenkette des Klartextblocks gebildet wird, in einer zweiten Speichervorrichtung und anderer Chiffretextzeichenketten in einer ersten Speichervorrichtung umfasst.

**14.** Computerprogramm zum Verschlüsseln aufeinanderfolgender Klartextzeichenketten ($M_1$, $M_2$, ..., $M_n$), das Folgen-

des umfasst:

ein Hash-Erzeugungselement, das dafür ausgelegt ist, einen Hash-Wert aus mindestens einer der vorausgegangenen Klartextzeichenketten ($M_1$, ..., $M_{j-1}$), die der momentan verschlüsselten Klartextzeichenkette ($M_j$) vorausgehen, zu erzeugen,
ein Blockchiffreelement, das im Zählermodus arbeitet und dafür ausgelegt ist, in Reaktion auf den in einen Zählereingang eingespeisten Hash-Wert und einen in einen Schlüsseleingang eingespeisten Verschlüsselungsschlüssel einen Schlüssel-Stream zu erzeugen,
ein Element, das dafür ausgelegt ist, eine XOR-Funktion auszuführen, die in Reaktion auf die zu verschlüsselnde Klartextzeichenkette ($M_j$) und den Schlüssel-Stream eine Chiffretextzeichenkette ($C_j$) erzeugt, wobei der Hash-Wert, der beim Verschlüsseln der momentan verschlüsselten Klartextzeichenkette ($M_j$) verwendet wird, von der Klartextzeichenkette ($M_j$) und den anschließenden Klartextzeichenketten ($M_{j+1}$, ..., $M_n$) unabhängig ist.

**15.** Computerprogramm nach Anspruch 14, wobei das Hash-Erzeugungselement einen MAC- oder CMAC-Algorithmus abarbeitet.

**Revendications**

**1.** Procédé de création d'un bloc de texte chiffré à partir d'un bloc de texte en clair, qui est divisé en une séquence ($M_1$, $M_2$,..., $M_n$) de chaînes de caractères de texte en clair consécutives à crypter en succession, dans lequel un chiffrement par blocs fonctionnant en mode Compteur et ayant une entrée de compteur, une entrée pour une clé de cryptage (K) et une sortie à partir de laquelle un flux de clé est obtenu, est utilisé,
dans lequel le procédé comprend les étapes de :

l'utilisation d'une fonction de hachage pour générer un hachage à partir d'au moins la première chaîne de caractères de texte en clair précédente ($M_{j-1}$) précédant dans la séquence une chaîne de caractères de texte en clair ($M_j$) à crypter,
l'application du hachage à l'entrée de compteur du chiffrement par blocs, et
l'alimentation de la chaîne de caractères de texte en clair ($M_j$) à crypter et du flux de clé en tant qu'entrées dans une fonction XOR qui délivre une chaîne de caractères de texte chiffré ($C_j$),
dans lequel le hachage utilisé dans le cryptage de la chaîne de caractères de texte en clair ($M_j$) est indépendant de ladite chaîne de caractères de texte en clair ($M_j$) et des chaînes de caractères de texte en clair suivantes ($M_{j+1}$,..., $M_n$).

**2.** Procédé selon la revendication 1, dans lequel le chiffrement par blocs fonctionne en AES Counter mode.

**3.** Procédé selon la revendication 1, dans lequel la fonction de hachage est un algorithme de hachage cryptographique.

**4.** Procédé selon la revendication 1, dans lequel le hachage généré par la fonction de hachage est un code d'authentification de message (MAC) ou un code d'authentification de message basé sur chiffrement (CMAC).

**5.** Procédé selon la revendication 3 ou 4, dans lequel un code d'authentification de message (MAC; CMAC), qui est formé à partir de la deuxième chaîne de caractères de texte en clair précédente ($M_{j-2}$) précédant dans la séquence la chaîne de caractères de texte en clair ($M_j$) à crypter, est utilisé en tant que clé pour le code d'authentification de message, dans lequel la clé comprend une influence de tous les codes d'authentification de message précédents.

**6.** Procédé selon la revendication 1, dans lequel au moins l'un desdits blocs de texte chiffré est partitionné en au moins deux sections de taille différente, qui sont enregistrées dans des dispositifs de mémoire distincts.

**7.** Procédé selon la revendication 1, dans lequel la première chaîne de caractères de texte chiffré ($C_i$) formée à partir de la première chaîne de caractères de texte en clair ($M_j$) du bloc de texte en clair est stockée dans un deuxième dispositif de mémoire et les autres chaînes de caractères de texte chiffré ($C_1$, $C_2$,..., $C_n$) sont stockées dans un premier dispositif de mémoire.

**8.** Procédé selon la revendication 6 ou 7, dans lequel le premier dispositif de mémoire est une mémoire amovible reliée à un premier ordinateur, et la deuxième mémoire est reliée à un deuxième ordinateur, dans lequel le premier ordinateur peut être relié à un deuxième ordinateur par l'intermédiaire d'un réseau de télécommunications pour obtenir les autres chaînes de caractères de texte chiffré stockées à l'intérieur de celui-ci.

**9.** Agencement de création d'un bloc de texte chiffré à partir d'un bloc de texte en clair, qui est divisé en une séquence ($M_1$, $M_2$,..., $M_n$) de chaînes de caractères de texte en clair consécutives à crypter en succession, dans lequel l'agencement comprend :

un élément de génération de hachage qui est apte à générer une valeur de hachage à partir d'au moins la chaîne de caractères de texte en clair précédente ($M_{j-1}$) précédant une chaîne de caractères de texte en clair ($M_j$) à crypter,
un élément de chiffrement par blocs fonctionnant en mode Compteur et ayant une entrée de compteur, une entrée pour une clé de cryptage et une sortie, dans lequel ledit chiffrement par blocs est apte à générer un flux de clé à partir de la sortie en réponse à la valeur de hachage alimentée à l'entrée de compteur et d'une clé (K) alimentée à l'entrée de clé,
un moyen d'exécution d'une fonction XOR pour former une chaîne de caractères de texte chiffré ($C_j$) en réponse à la chaîne de caractères de texte en clair ($M_j$) à crypter et au flux de clé appliqués au moyen, dans lequel la valeur de hachage utilisée dans le cryptage de la chaîne de caractères de texte en clair ($M_j$) est indépendante de ladite chaîne de caractères de texte en clair ($M_j$) et des chaîne de caractères de texte en clair suivantes ($M_{j+1}$,..., $M_n$).

**10.** Agencement selon la revendication 9, dans lequel le chiffrement par blocs est apte à fonctionner en mode Compteur AES.

**11.** Procédé selon la revendication 9, dans lequel l'élément de génération de hachage est apte à générer l'un d'un code d'authentification de message (MAC) et d'un code d'authentification de message basé sur chiffrement (CMAC).

**12.** Agencement selon la revendication 11, dans lequel un code d'authentification de message (MAC; CMAC), qui est formé à partir de la deuxième chaîne de caractères de texte en clair précédente dans la séquence, précédant la chaîne de caractères de texte en clair à crypter, est utilisé en tant que clé pour le code d'authentification de message, dans lequel la clé comprend une influence de tous les codes d'authentification de message précédents.

**13.** Agencement selon la revendication 9, comprenant en outre un moyen de stockage de la première chaîne de caractères de texte chiffré formée à partir de la première chaîne de caractères de texte en clair du bloc de texte en clair dans un deuxième dispositif de mémoire et des autres chaînes de caractères de texte chiffré dans un premier dispositif de mémoire.

**14.** Programme informatique pour crypter des chaînes de caractères de texte en clair successives ($M_1$, $M_2$,..., $M_n$), comprenant :

un élément de génération de hachage qui est apte à générer une valeur de hachage à partir d'au moins l'une des chaînes de caractères de texte en clair précédentes ($M_1$,..., $M_{j-1}$) précédant la chaîne de caractères de texte en clair ($M_j$) en cours de cryptage,
un élément de chiffrement par blocs fonctionnant en mode Compteur apte à former un flux de clé en réponse à la valeur de hachage alimentée à une entrée de compteur et une clé de cryptage alimentée à une entrée de clé,
un élément apte à effectuer une fonction XOR, qui produit une chaîne de caractères de texte chiffré ($C_j$) en réponse à la chaîne de caractères de texte en clair ($M_j$) à crypter et au flux de clé, dans lequel la valeur de hachage utilisée dans le cryptage de la chaîne de caractères de texte en clair en cours de cryptage ($M_j$) est indépendante de ladite chaîne de caractères de texte en clair ($M_j$) et des chaîne de caractères de texte en clair suivantes ($M_{j+1}$,..., $M_n$).

**15.** Programme informatique selon la revendication 14, dans lequel l'élément de génération de hachage exécute un algorithme MAC ou CMAC.

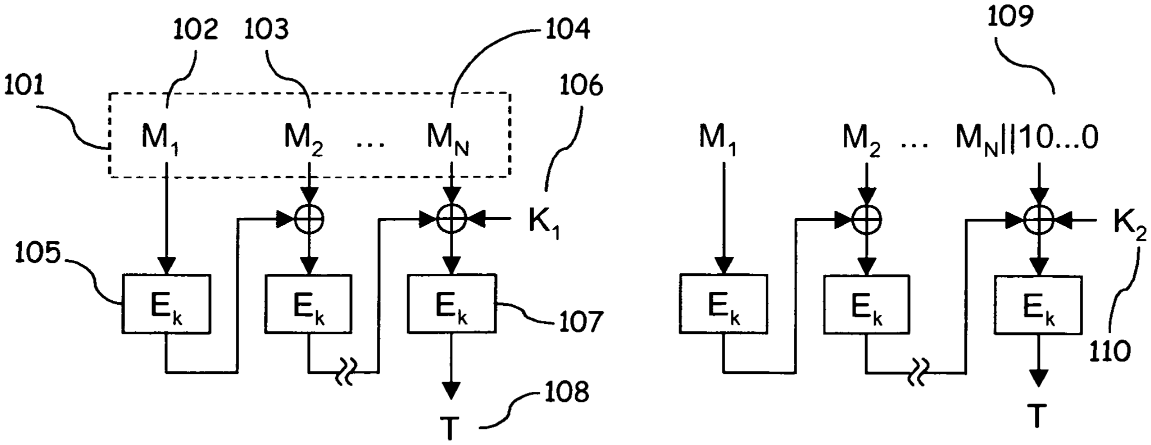


Prior Art ( NIST Special Publication 800-38B)

*Fig. 1*

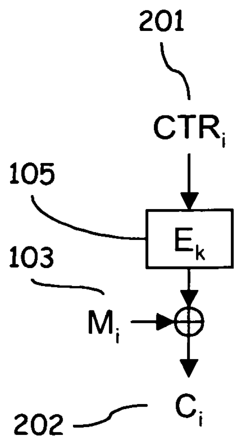


Prior Art (NIST Special Publication 800-38A)

*FIG. 2*

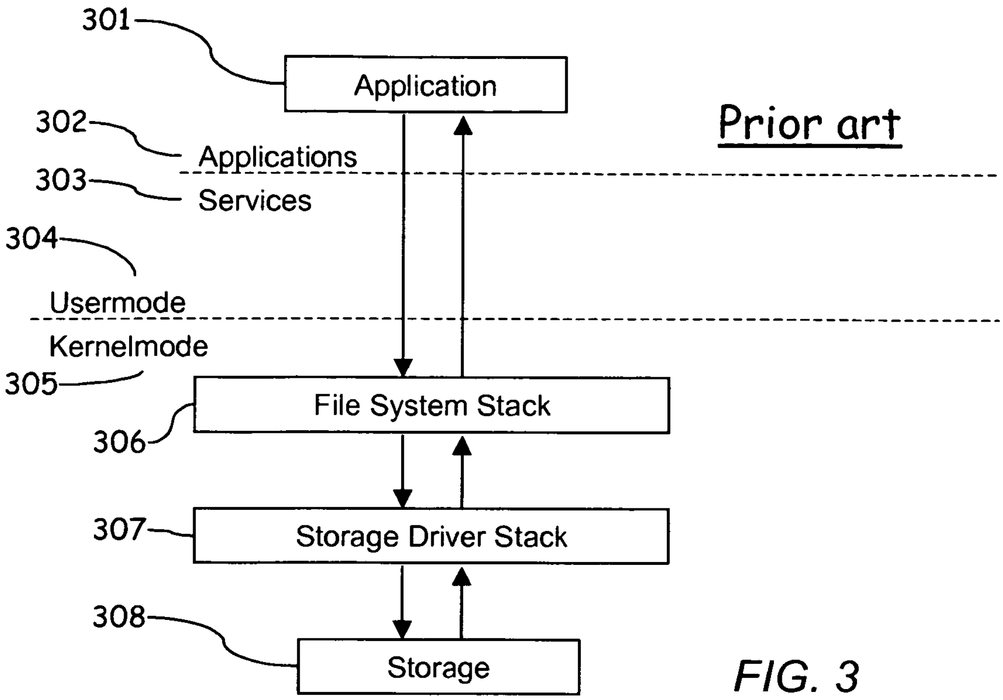
301
Application
302
Applications
303
Services
304
Usermode
Kernelmode
305
File System Stack
306
307
Storage Driver Stack
308
Storage
Prior art

FIG. 3

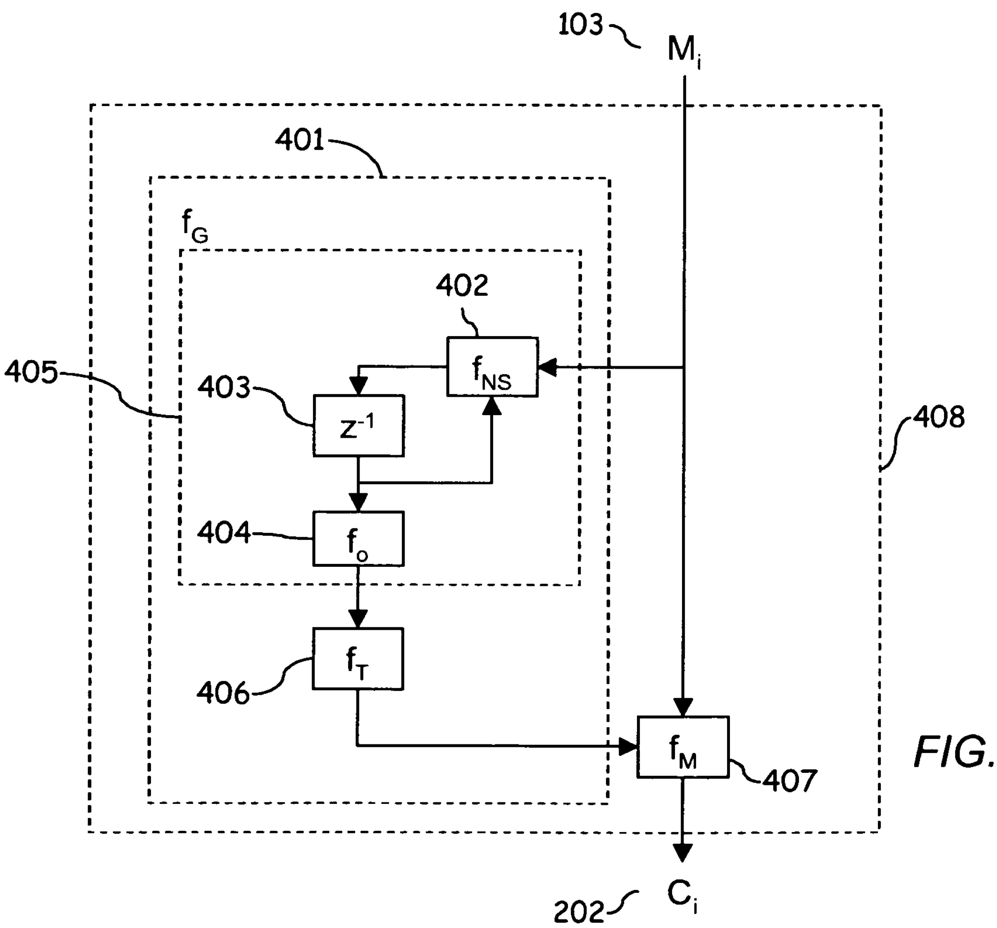
103
$M_i$
401
$f_G$
402
$f_{NS}$
403
$z^{-1}$
404
$f_o$
405
406
$f_T$
$f_M$
407
408
202
$C_i$

FIG. 4

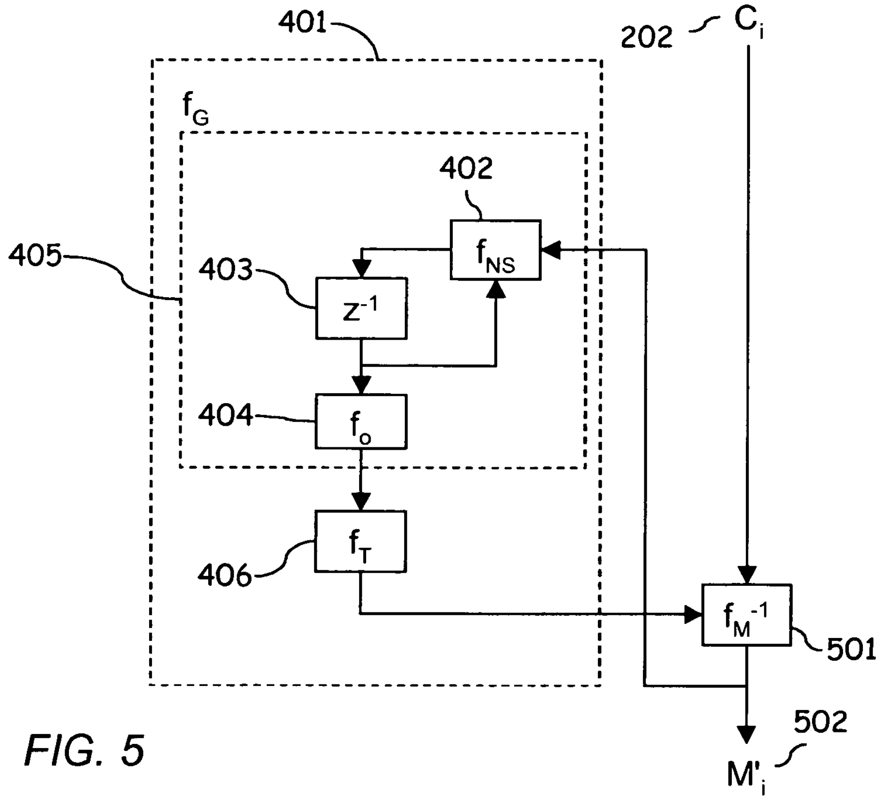

401
202
$C_i$
$f_G$
402
405
403
$f_{NS}$
$z^{-1}$
404
$f_o$
$f_T$
406
$f_M^{-1}$
501
502
$M'_i$


FIG. 5

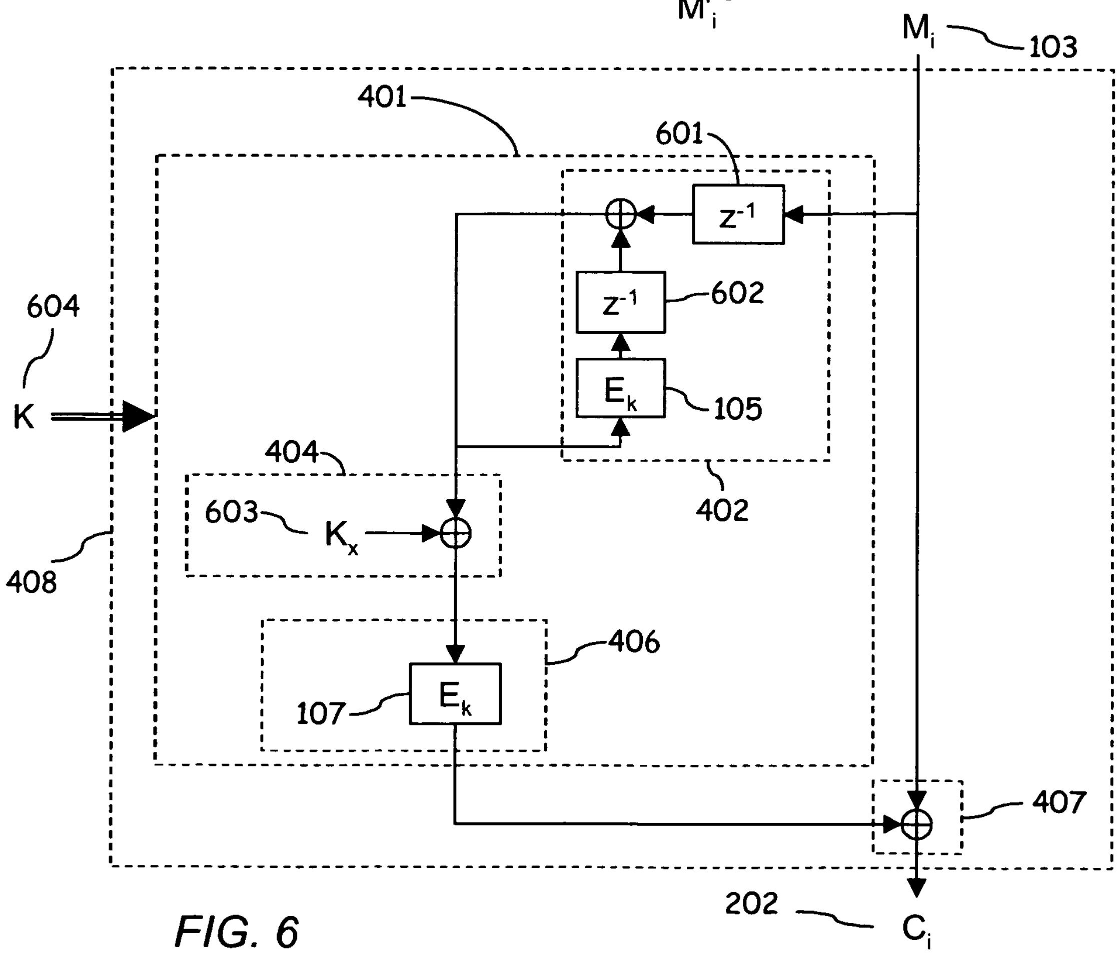

$M_i$
103
401
601
$z^{-1}$
$z^{-1}$
602
604
$E_k$
105
K
404
402
603
$K_x$
408
406
107
$E_k$
407
202
$C_i$


FIG. 6

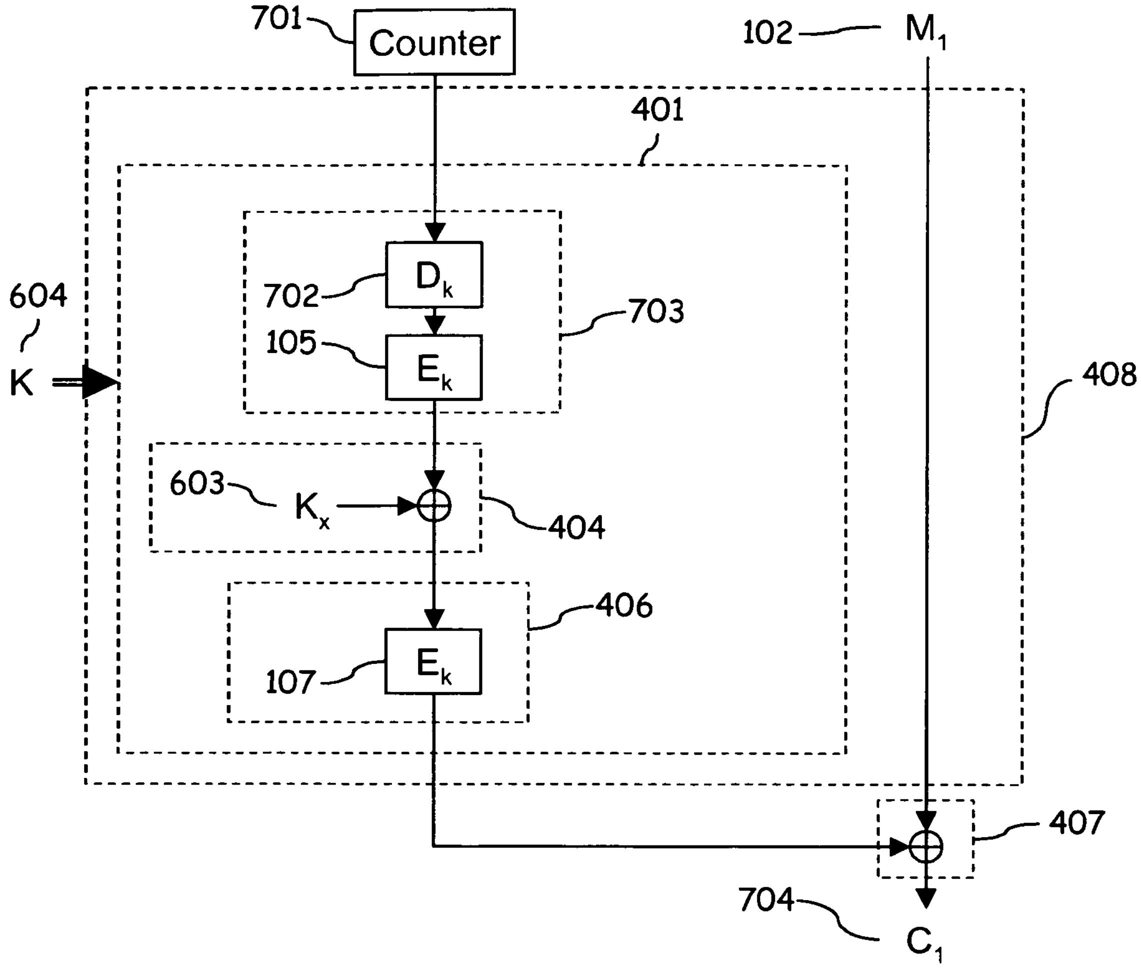
701
Counter
102
M1
401
604
K
702
Dk
105
Ek
703
408
603
Kx
404
406
107
Ek
407
704
C1

*FIG. 7*

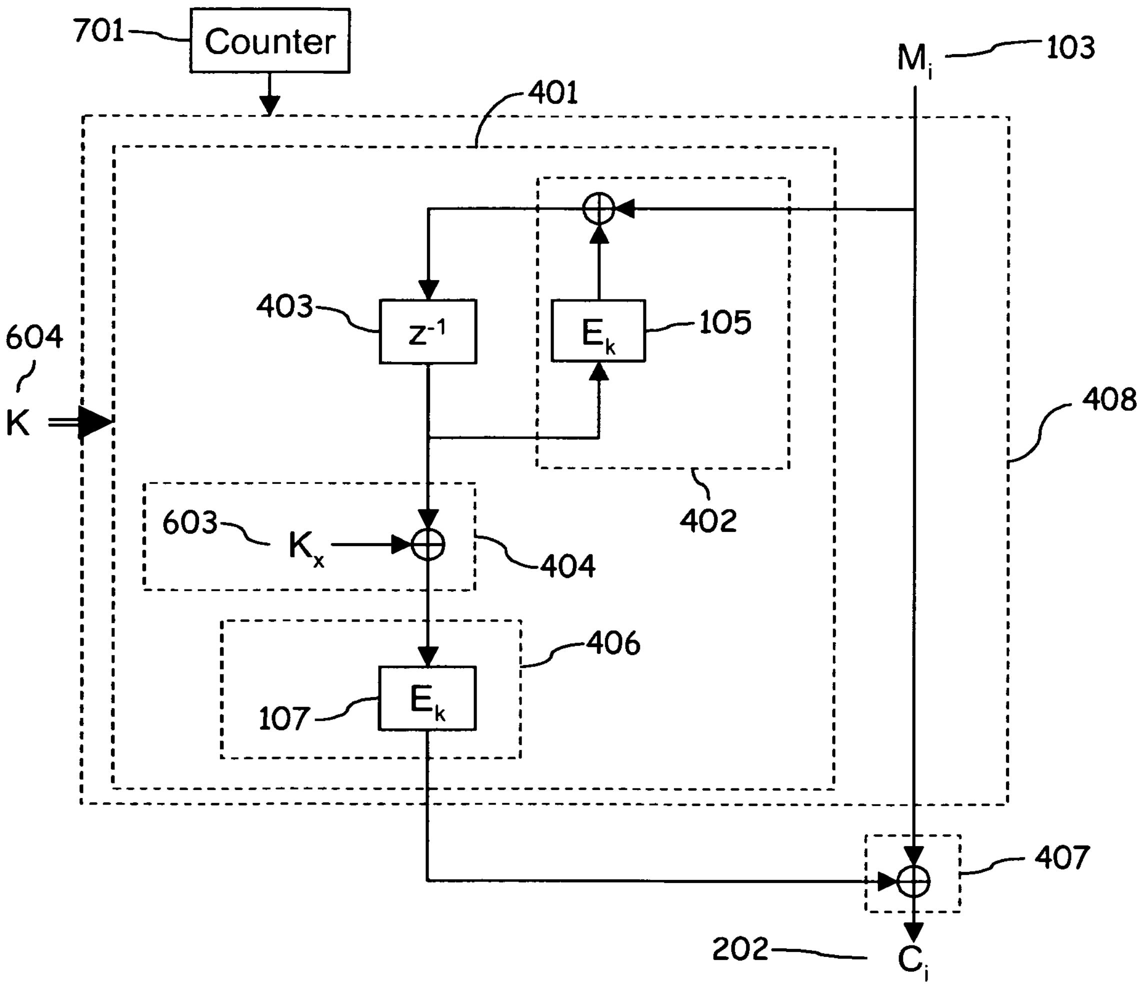
701
Counter
401
Mi
103
403
z-1
Ek
105
604
K
408
402
603
Kx
404
406
107
Ek
407
202
Ci

FIG. 8

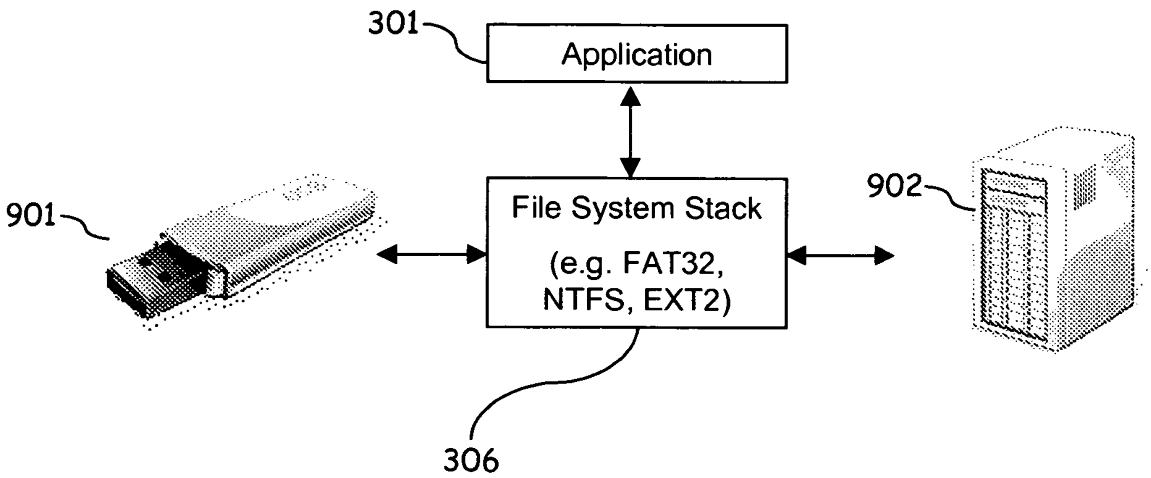
301
Application
File System Stack
(e.g. FAT32, NTFS, EXT2)
306
901
902

FIG. 9

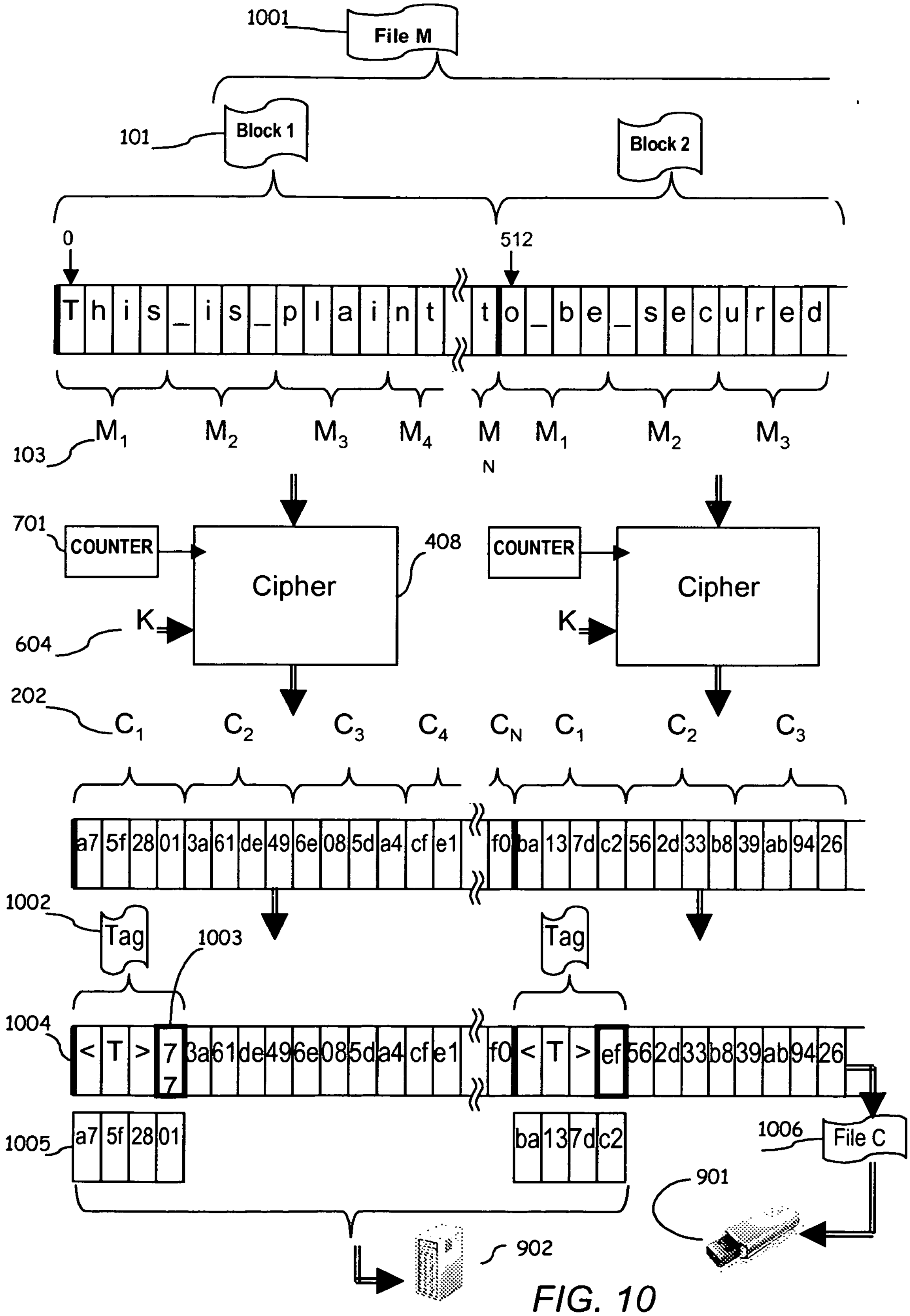
1001
File M
101
Block 1
Block 2
0
512
T h i s _ i s _ p l a i n t
t o _ b e _ s e c u r e d
103
M1 M2 M3 M4 MN M1 M2 M3
701
COUNTER
Cipher
408
COUNTER
Cipher
604
K
K
202
C1 C2 C3 C4 CN C1 C2 C3
a7 5f 28 01 3a 61 de 49 6e 08 5d a4 cf e1
f0 ba 13 7d c2 56 2d 33 b8 39 ab 94 26
1002
Tag
1003
Tag
1004
< T > 7 7 3a 61 de 49 6e 08 5d a4 cf e1
f0 < T > ef 56 2d 33 b8 39 ab 94 26
1005
a7 5f 28 01
ba 13 7d c2
1006
File C
901
902

FIG. 10

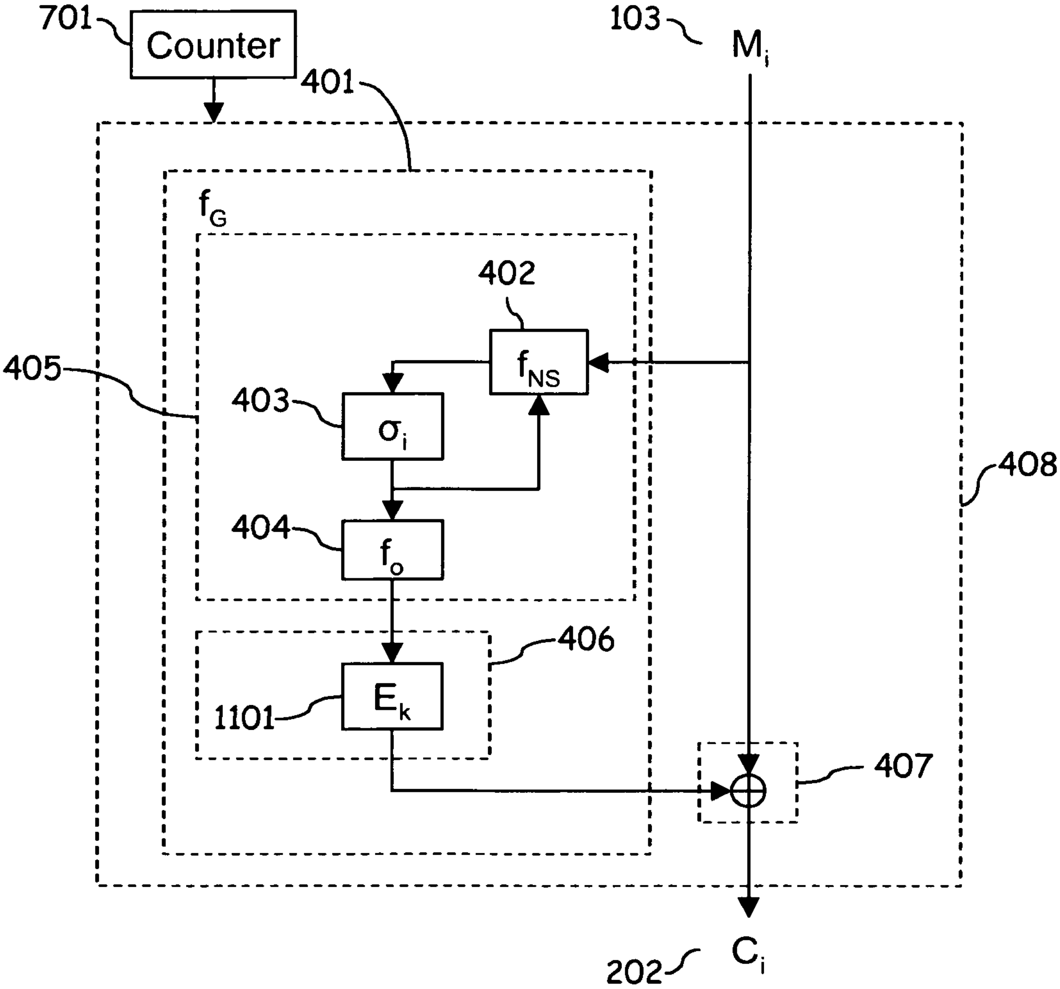
701
Counter
103
$M_i$
401
$f_G$
402
$f_{NS}$
405
403
$\sigma_i$
408
404
$f_o$
406
$E_k$
1101
407
202
$C_i$

FIG. 11

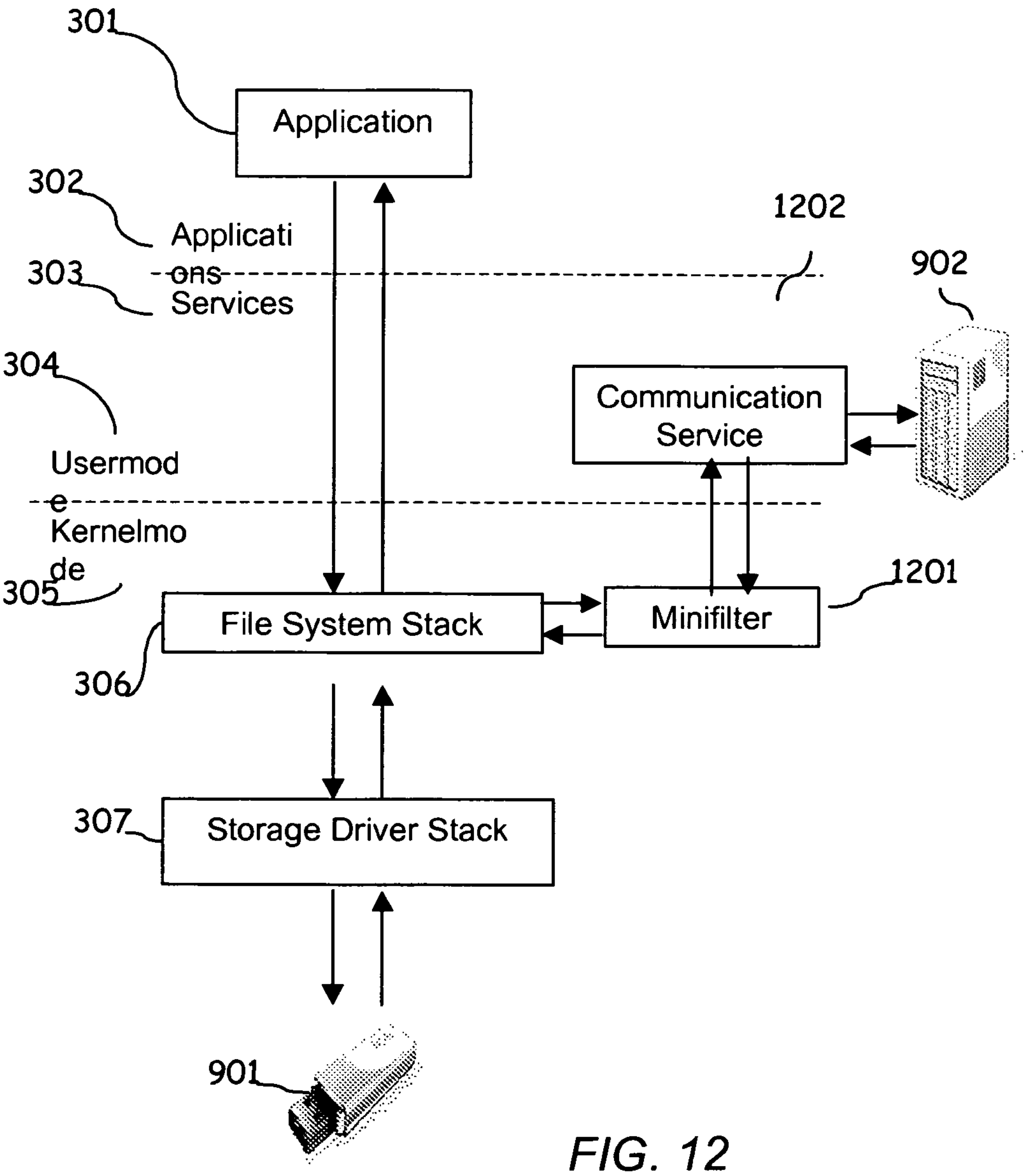
301
Application
302
Applicati
ons
303
Services
1202
902
304
Usermod
e
Kernelmo
de
305
Communication
Service
File System Stack
Minifilter
1201
306
307
Storage Driver Stack
901

FIG. 12

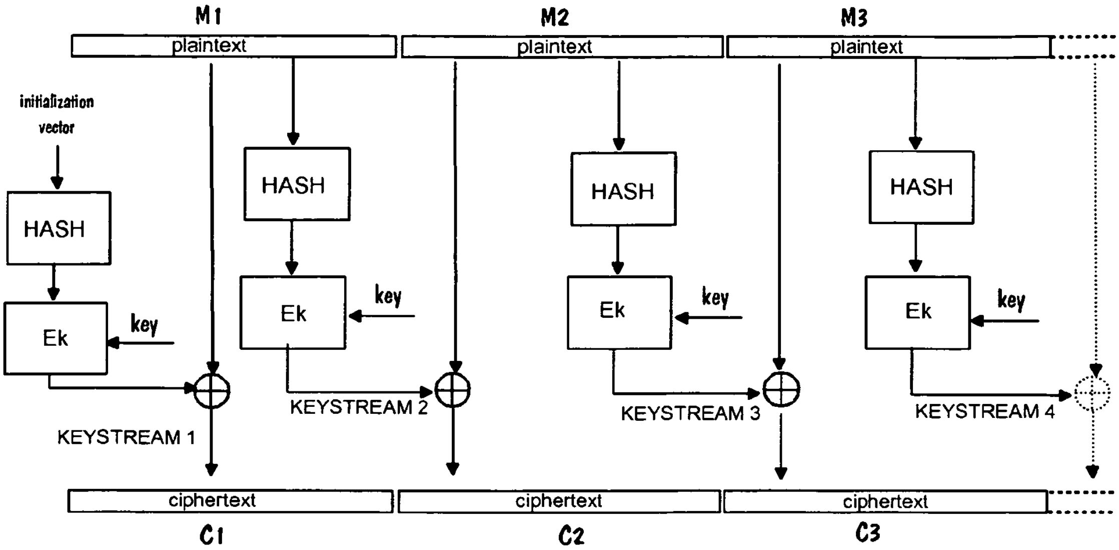
M1
M2
M3
plaintext
plaintext
plaintext
initialization vector
HASH
HASH
HASH
HASH
Ek
key
Ek
key
Ek
key
Ek
key
KEYSTREAM 1
KEYSTREAM 2
KEYSTREAM 3
KEYSTREAM 4
ciphertext
ciphertext
ciphertext
C1
C2
C3

*FIG. 13*

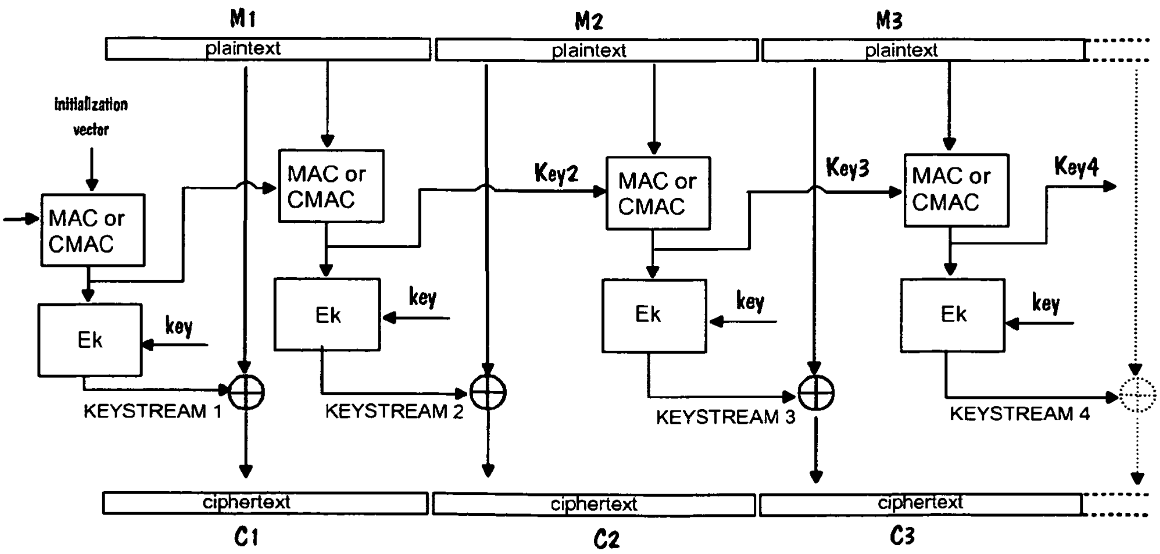
M1
M2
M3
plaintext
plaintext
plaintext
initialization vector
MAC or CMAC
MAC or CMAC
Key2
MAC or CMAC
Key3
MAC or CMAC
Key4
Ek
key
Ek
key
Ek
key
Ek
key
KEYSTREAM 1
KEYSTREAM 2
KEYSTREAM 3
KEYSTREAM 4
ciphertext
ciphertext
ciphertext
C1
C2
C3

*FIG. 14*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03088052 A
- US 20030108196 A, Kirichenko
- US 4815130 A, Lee
- US 20090034715 A, Ramasamy


### Non-patent literature cited in the description


- Discrete Mathematics and Its Applications. **ALFRED MENEZES ; PAUL VAN OORSCHOT ; SCOTT VANSTONE.** Handbook of Applied Cryptography. CRC-Press, 1996